# EUROPEAN PATENT APPLICATION

(11) **EP 1 245 273 A2**
(43) Date of publication of application: **02.10.2002**
(21) Application number: 02252355.9
(22) Date of filing: 28.03.2002
(51) Int. Cl.: B01J 19/00

(54) **Manufacturing method and apparatus for probe carriers**

(30) Priority: 28.03.2001 JP 2001094114
(71) Applicant: CANON KABUSHIKI KAISHA, Tokyo (JP)
(72) Inventor: Watanabe, Hidenori, Ohta-ku, Tokyo (JP); Okamoto, Tadashi, Ohta-ku, Tokyo (JP); Mihashi, Naoto, Ohta-ku, Tokyo (JP)
(74) Representative: Beresford, Keith Denis Lewis

(57) **Abstract**

Method of manufacture of probe carriers in which plural kinds of probes are arranged on substrates by ejecting plural kinds of probe solutions containing probe materials specifically associable to target substances from a liquid ejecting device (21) onto the substrates (24), wherein the probe solutions are ejected from the liquid ejecting device (21) onto the substrates (24) while a substrate holding part whereupon the substrates are placed is moved relative to the liquid ejecting device (21) and a manufacturing apparatus exclusively used for the method. The present invention enables stable manufacture of probe carriers without overflow of the probe solutions from reservoirs (59, 72) in which probe substances are held.

## Description

The present invention relates to a manufacturing method for probe carriers om a solid substrate and a manufacturing apparatus for probe carriers exclusively utilized for implementation of said manufacturing method. The present invention also relates to a liquid ejecting device for manufacturing probe carriers.

In carrying out base sequence analysis of gene DNAs or simultaneous multitudinous high-reliability gene diagnosis, it is necessary to classify DNAs having desired base sequences by using plurality of probes. As a means for providing a plurality of probes used for this classification works, DNA microchips are attracting attention. Further, in high-throughput screening of pharmaceuticals and development of pharmaceuticals by means of combinatorial chemistry, it is also necessary to carry out systematic screening of a large number (for example 96, 384 or 1536) of the solution of objective proteins and pharmaceuticals. For that purpose, there have been developed methods of arraying various pharmaceuticals, technology for automated screening with such array, special-purpose apparatuses and softwares for controlling sets of screening operations and statistical treatment of the results.

Fundamentally, these parallel screening operations use so-called probe carriers (probe arrays) in which known probes, that serve as means of classification of substances to be evaluated, are arrayed. These operations detect whether the substances act or react on probe materials under the same conditions. Generally, it is previously determined which action or reaction to probe materials is utilized, so that the probe materials provided in a probe carrier are roughly classified into one kind of material, such as a group of probe material for DNAs with different base sequences. Namely, the substances utilized as a group of probe materials are, for example, DNAs, proteins, synthesized chemical substances (pharmaceuticals) or the like. In many cases, probe carriers consisting of a group of plural kinds of probes are used. However, some screening operation can use probe carriers in which many DNAs with an identical base sequence, many proteins with an identical amino acid sequence, and identical chemical substances are arranged on a lot of points as a probe, depending upon characteristics of the screening operations. These are mainly used for pharmaceutical screening.

In probe carriers consisting of a group of plural kinds of probes (particularly, a group of DNAs with different base sequences, a group of proteins with different amino acid sequences, or a group of different chemical substances), the plural kinds forming the group are often arranged according to a predetermined sequence order. Among them, DNA probe carriers are used when conducting analysis of base sequence of a gene DNA or when conducting simultaneous multitudinous high-reliability gene diagnoses.

As one of a method for arranging a group of plural kinds of probes on a substrate, plural kinds of probe solutions are ejected sequentially onto the substrate from a liquid ejection device in a desired timing to arrange them on the substrate. There have been disclosed some inventions concerning liquid ejection devices based on ink jet technologies which are generally used for printers.

For example, Japanese Patent Application Laid-open No. 11-187900 (1999) discloses a method for arranging probes on solid phase by attaching liquids containing probe materials on the solid phase as droplets ejected from a thermal ink jet head. In this method, the probe materials are DNAs which are synthesized and purified in advance. In some cases, the lengths of bases are confirmed before attaching them on the solid phase.

Further, European Patent Publication No. EP 0703825B1 describes a method for solid phase synthesis of plural kinds of DNA each having a determined base sequence by supplying nucleotide monomers and activator, that are utilized for solid phase synthesis of DNA, from separate piezoelectric jet nozzles. This method conducts the solid phase synthesis of DNA on a substrate and supplies solutions of substances required for the synthesis by ink jet method at each elongation stage.

As introduced above, the ink jet technology generally used for printers has been used as the conventional method for producing probe carriers.

However, some problems arose in preparation of probe carriers when printing (drawing) method adapted for printers applied as-is to arrangement of probes. This point will be described in detail below.

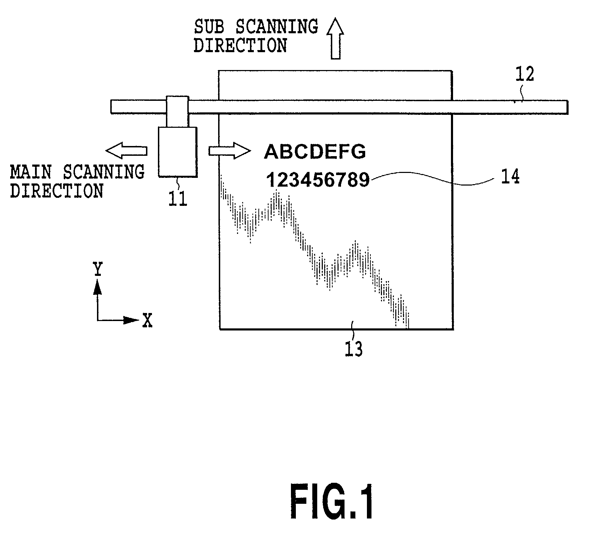

Printing (drawing) method adapted for printers is generally carried out as follows. Fig. 1 is a schematic view illustrating the printing method and structure of a printer using an ordinary ink jet head. In Fig. 1, the reference numeral 11 denotes an ink jet head, the reference numeral 12 denotes a shaft for guiding the ink jet head substantially in a main scanning direction, the reference numeral 13 denotes a sheet of paper, and the reference numeral 14 denotes the printed letters . The sheet of paper 13 moves in the Y direction in Fig. 1 by a roller (not shown).

The ink jet head 11 can move in the X direction, and the paper 13 can move in the Y direction by the roller (not shown). Therefore, the ink jet head 11 can move two dimensionally relative to the paper 13, enabling printing at any positions on the paper.

Many printers adopt the structure that both of the head and the sheet of paper move in perpendicular directions as shown in Fig. 1,because this structure fits miniaturization of printers. In current ordinary printers, the speed of movement of ink jet heads in rapid printing is as fast as 30 cm/s to 100 cm/s.

Incidentally, a printer head greatly differs from a liquid ejection device for preparation of probe carriers in the following points. The printer head is a device developed for printing letters and images. Therefore, the liquid used is a monochrome (black) ink in the case of monochrome (generally black) printing, or inks of three primary colors of subtractive process, namely yellow (Y), cyan (C) and magenta (M) in the case of color printing. Even though dark and light black inks and/or dark and light Y, M, and C inks are optionally used in the case of color printing, no more than 10 kinds of inks are used at most.

Further, since large amounts of inks are used in printing paper, conventional ink jet printing heads comprise tanks (reservoirs) of enough capacity, channels that lead inks to nozzles, and nozzles that eject inks.

On the other hand, liquid ejection devices used for ejecting liquids in preparation of probe carriers are desired to eject many kinds of liquids. In the case of a liquid ejection unit with a plurality of nozzles, the liquid ejection unit desirably has a plurality of nozzles and liquid reservoirs corresponding one to one to the plurality of nozzles.

Further, in preparation of probe carriers using a liquid ejection device, the volume of the reservoirs of the liquid ejection device can be relatively small, since the liquid is not consumed so much as in the case of printing to paper with an ink jet head of a printer.

Moreover, since printer inks do not change once the design is determined, the reservoirs can take closed structures. On the other hand, the liquid ejection device for probe carrier preparation can hardly adopt reservoirs of closed structure, since the probe materials to be loaded into reservoirs will change every time probe carriers to be prepared change, and since certain probe materials may be deteriorated in several hours after preparation.

Thus, the present inventors contrive the aspect as the liquid ejection device for preparing the probe carrier wherein: various kinds of probe solutions can be loaded; the probe solutions can be ejected immediately after loading thereof; a lot of reservoirs of relatively simple structure, whose number is corresponding to the number of kinds of the probe solutions, is provided; and each of the reservoirs on the surface from which the probe solution is loaded (i.e. opposite surface of the liquid ejection port) has not a lid and is open to air, so that each of the reservoirs does not have sealed structure. However, where the liquid ejection devices equipped with such reservoirs is applied to the printing method generally adopted in the above-mentioned printers to prepare probe carriers, there are found cases where probe solutions loaded into the reservoirs overflow or, furthermore, flow into adjacent reservoirs. In the above cases, the probe solution in the reservoirs may overflow from the surface from which the probe solution is loaded due to the inertia caused by acceleration and deceleration in the scanning direction and sudden stop of the head, since the ink jet recording head moves in high speed.

Therefore, good probe carriers cannot be prepared by simple application of as-is printing method of printers to preparation of probe carriers.

The purpose of the present invention is to solve the above problems and provide a method for preparation of probe carriers and an apparatus for preparation that can stably prepare probe carriers without overflow of probe solutions from reservoirs containing probe materials, when probe carriers are prepared using liquid ejection devices.

The present inventors eagerly advanced research to solve the above-mentioned problems, and found that probe carriers can be stably prepared by adopting a structure in which the liquid ejection device for ejecting probe solutions is fixed and the stage on which probe carriers are arranged (substrate holding part) moves two dimensionally relative to said liquid ejection device.

The above and other objects, effects, features and advantages of the present invention will become more apparent from the following description of embodiments thereof taken in conjunction with the accompanying drawings.
Fig. 1 is a schematic view showing an exemplary construction of a conventional printer;
Fig. 2 is a schematic view showing an example of construction of a probe carrier manufacturing apparatus;
Fig. 3 is a perspective view showing an example of construction of a probe carrier manufacturing apparatus;
Fig. 4 is a schematic view showing an example of construction of a probe carrier;
Fig. 5 is a schematic cross-sectional view showing an example of construction of one of the liquid ejection units of a liquid ejection device;
Fig. 6 is a schematic cross-sectional view showing an example of construction of one of the liquid ejection units of a liquid ejection device;
Fig. 7 is a schematic view of a liquid ejection device with its feed openings serving as reservoirs; and
Fig. 8 is a schematic view of a liquid ejection device equipped with secondary reservoirs.

The manufacturing method of probe carriers of the present invention will be explained below in more detail. While the examples shown here are best embodiments of the present invention, the present invention is not limited by the examples.

In the embodiment of the present invention, the target substances are nucleic acids, and the probes are single-strand nucleic acids which have complemental base sequence to the whole or part of the target nucleic acid, so that the probes can specifically hybridize with the base sequence of the target nucleic acids.

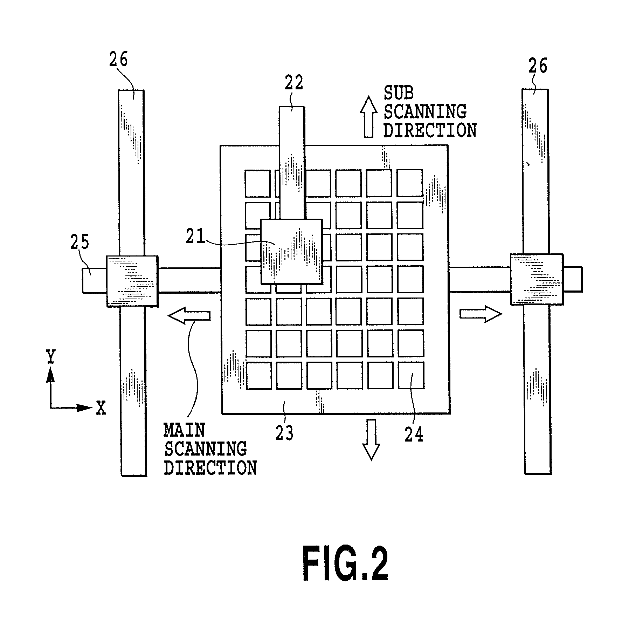

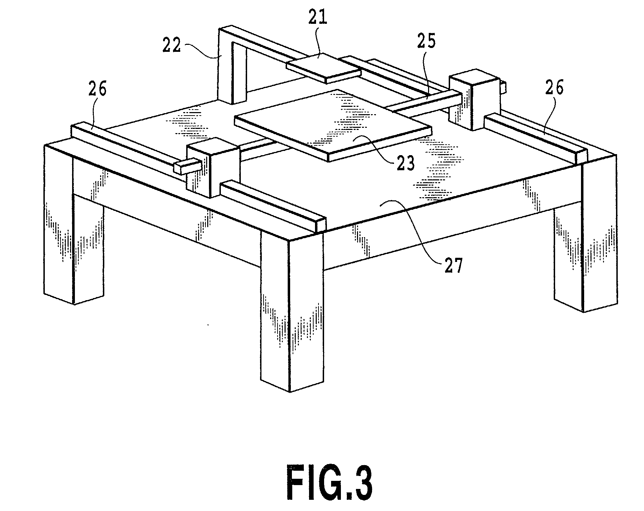

Fig. 2 and Fig. 3 show schematic views of a probe carrier manufacturing apparatus using a liquid ejection device. Fig. 2 is a top view and Fig. 3 is a perspective view.

In Fig. 2 and Fig. 3, the reference numeral 21 denotes a liquid ejection device, the reference numeral 22 denotes an arm holding the liquid ejection device, the reference numeral 23 denotes a stage on which the substrate of probe carriers is fixed (a substrate holding part), the reference numeral 24 denotes a glass substrate serving as a substrate for probe carriers, the reference numeral 25 denotes a shaft for guiding the movement of the stage substantially parallel to X axis, and the reference numeral 26 denotes a shaft for guiding the movement of the stage substantially parallel to Y axis. In Fig. 3, the reference numeral 27 denotes a device stand.

The liquid ejection device 21 is fixed on the device stand 27. The stage 23 can move in both of the first direction (i.e. X direction) and the second direction (i.e. Y direction). Therefore, the liquid ejection device 21 can move two dimensionally relative to the stage 23. While a structure of moving the stage 23 two dimensionally using the shafts 25 and 26 that extend in perpendicular directions is shown in Fig. 2 and Fig. 3, the stage 23 may also be moved two dimensionally using other systems capable of precise positioning. For example, the stage can be moved by two dimensionally movably holding the stage 23 using bearings etc., and moving it using wires or belts fixed to the stage 23 and stretched in perpendicular directions.

When the glass substrate 24 fixed to the stage passes under the liquid ejection device 21, the probe solution is ejected from the liquid ejection device at desired timing to arrange the probes onto the glass substrate.

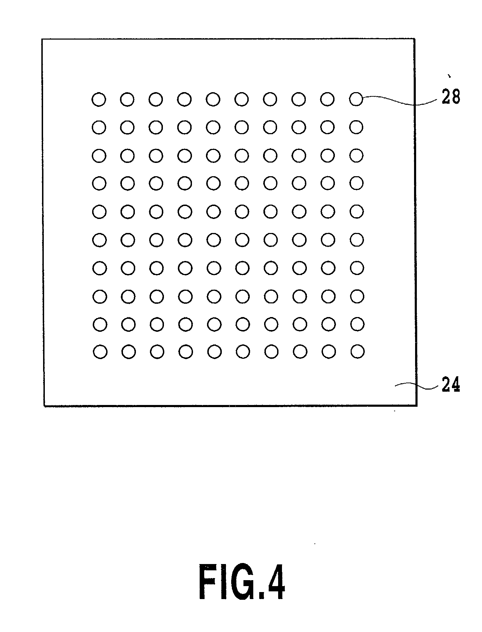

Fig. 4 shows a schematic view of the probe carrier. The probes 28 are regularly arranged on the glass substrate 24 as shown in Fig. 4. When preparing the probe carrier by ejecting the probe solution form the above liquid ejecting device 21 onto the glass substrate 24, the probe solution in the reservoir does not overflow over the opening of the reservoir for loading the probe solution, by rendering the liquid ejecting device 21 fixed and immovable and moving the above stage 23.

When previously synthesized and purified probe materials (such as DNAs) are arranged on substrates, the liquid ejection device 21 preferably has a structure provided with the same number of nozzles capable of ejecting probe solutions as the number of probes arranged onto the glass substrate.

Preferably, the density of arrangement of the nozzles of the liquid ejection device equals the density of arrangement of the probes in the probe carriers to be prepared, since the probe carrier can be prepared by one scanning of the liquid ejection device.

Further, while Fig. 2 shows the structure of a probe carrier manufacturing apparatus for arranging probes on a plurality of fixed glass substrates, probes can also be arranged on a large glass substrate which is then cut to give a plurality of probe carriers.

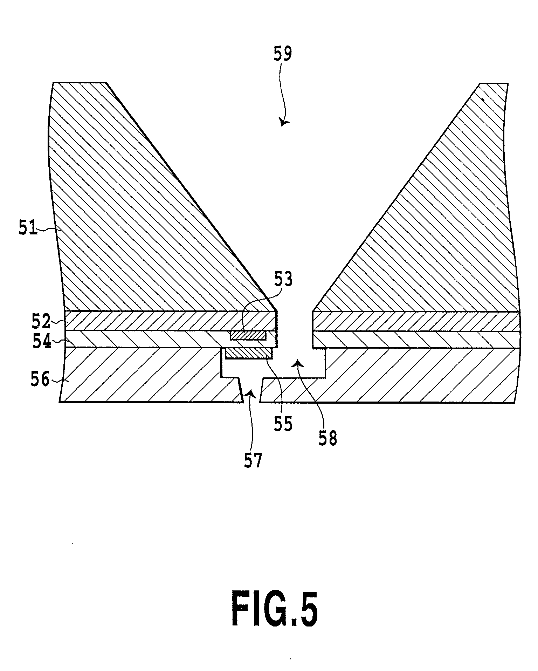

Fig. 5 is a schematic view showing one of the liquid ejection units of a liquid ejection device. The liquid ejection method includes the bubblejet method that ejects liquid by means of thermal energy generated by a heater, and the piezoelectric jet method that ejects liquid by means of deformation of piezoelectric elements caused by applying voltage to the elements. Fig. 5 shows the structure of a liquid ejection device of the bubblejet method.

In Fig. 5, the reference numeral 51 denotes a silicon substrate, the reference numeral 52 denotes an insulating layer, the reference numeral 53 denotes a heater consisting of TaN, TaSi, TaAl, etc., the reference numeral 54 denotes a passivation layer, the reference numeral 55 denotes a cavitation-resistant film, the reference numeral 56 denotes the nozzle material, the reference numeral 57 denotes a nozzle, the reference numeral 58 denotes the flow path, and the reference numeral 59 denotes the feed opening.

The heater 53 is connected at both ends to wiring (not shown) of aluminum, etc., through which desired voltage pulses are applied at both ends of the heater 53.

The insulating layer 52 can be either thermal-oxide layer formed by thermal oxidation of the silicon substrate, or oxide or nitride layer formed by CVD.

The nozzle material 56 that form nozzles (liquid ejection port) 57 and the flow paths 58 can be formed either by sticking nozzle material on which the nozzle and the flow path are already formed to the semiconductor substrate, or by using a semiconductor process based upon photolithography technology.

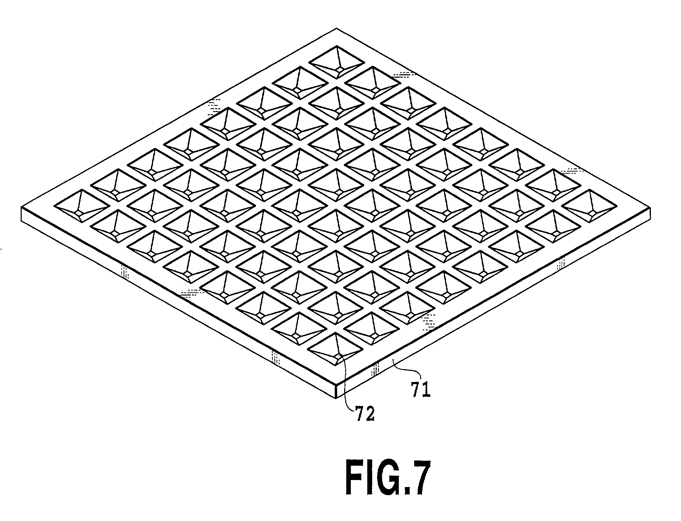

The feed opening 59, which is positioned on the opposite surface to the above-described nozzle 57 and provided for load and supply of the probe solution, is an opening having no lids individually and being open(i.e. solution reservoir for holding the probe solution), and is formed by anisotropic etching of silicon using an aqueous solution of tetramethylammonium hydroxide (TMAH). In the case of a silicon substrate having (100) plane on the surface, an aperture is made at a slant against the surface of the substrate, whose angle is 54.7° as shown in Fig. 5. Plurality of the nozzles 57 and the feed openings (the solution reservoirs) 59 are provided in pairs and the feed openings 59 are adjacent to each other, as shown in Fig. 7.

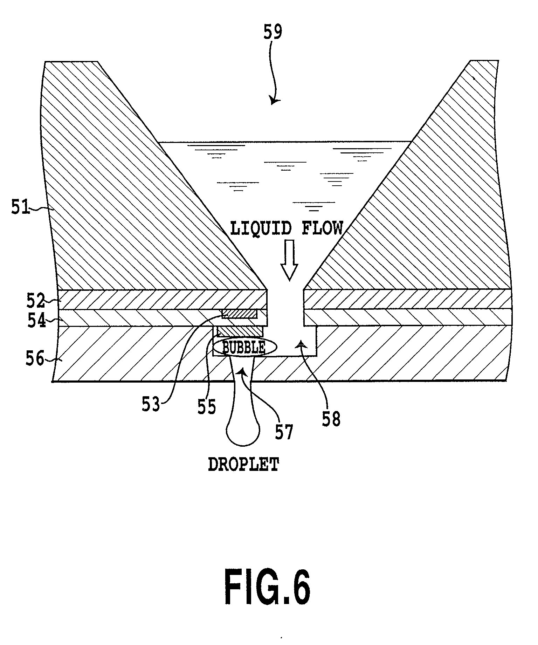

The probe solution is led from the feed opening 59 on the rear surface of the substrate through the flow path 58 to the nozzle 57 on the front surface of the substrate as shown in Fig. 6. When desired voltage pulse is applied at both ends of the heater 53, the probe solution near the heater is superheated to cause bubble forming by film-boiling, and the liquid is ejected as shown in Fig. 6.

When only a small number of probe carriers are manufactured and amount of probe solution ejected onto a probe is small, there are cases where the amount of probe solution existing in the feed opening is sufficient for manufacture of a series of the probe carriers. The shape of a liquid ejection device when the feed openings function as reservoirs is shown in Fig. 7. Fig. 7 shows a liquid ejection device on which plurality of the liquid ejection units shown in Fig. 5 and Fig. 6 are two dimensionally arranged, the reference numeral 71 denotes the silicon substrate (corresponding to 51 in Fig. 5) and the reference numeral 72 denotes the feed opening or reservoir (corresponding to 59 in Fig. 5).

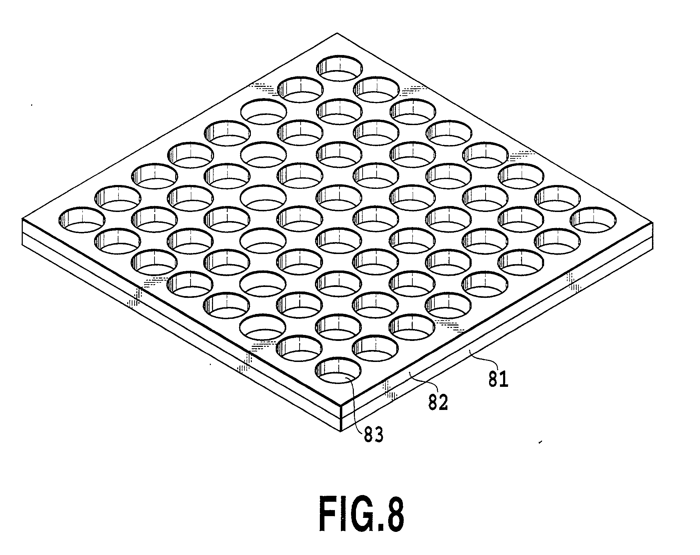

When the probe solutions should be ejected in larger amount, secondary reservoirs connected to the feed openings 72 (59) are provided. As the material of the secondary reservoirs, alumina (Al₂O₃) substrate, glass substrate or the like can be used, that has similar thermal expansion coefficient to that of silicon. The shape of a liquid ejection device having secondary reservoirs is shown in Fig. 8. In Fig. 8, the reference numeral 81 denotes the silicon substrate (corresponding to 71 in Fig. 7), the reference numeral 82 denotes the alumina (Al₂O₃) plate, and the reference numeral 83 denotes the reservoir manufactured by providing an opening on the alumina (Al₂O₃) plate. The reservoir 83 is provided at the position corresponding to the feed opening 72 (59) that is the reservoir in Fig. 7, so that it functions as a large volume reservoir together with the feed opening 72.

After preparation of desired series of probe materials, the probe materials are loaded into the reservoirs 72 or 83 using micropipettes, etc., and arrangement of probes is followed.

In order to eject probe solutions stably, it is essential to give rise to film-boiling stably. In order to give rise to film-boiling stably, it is desirable to apply voltage pulse of 0.1 to 5 µs to the heater.

The amount of probe solution ejected at one time from a nozzle is appropriately selected, taking account of various factors such as viscosity of probe solutions, affinity of probe solutions with the solid substrate, and reactivity of probe materials with the solid substrate, and according to the shape and dot size of the probe formed. Aqueous solvent is generally used for the probe solutions. In the method of the present invention, the volume of droplets of probe solutions ejected from each nozzle of the liquid ejection device is generally selected within the range of 0.1 pl to 100 pl. The nozzle diameter, etc., are preferably designed to fit the above volume.

The area occupied by array units (dots) on which the probe solution is applied is generally 0.01 µm² to 40000µm², determined by the size of the probe carrier itself and the density of arrangement of the probes.

In the present invention, the probes fixed to the substrate are specifically associable to specific target substances. In the embodiment of the present invention, the target substances are nucleic acids, and the probes are single-strand nucleic acids which have complemental base sequence to the whole or part of the target nucleic acid, so that the probes can specifically hybridize with the base sequence of the target nucleic acids. Further, the probes include oligonucleotides, polynucleotides, and other polymers that can recognize specific targets. The term "probe" means both of individual molecules having probe functions such as polynucleotide molecules and a mass of molecules having same probe functions fixed on the surface at separate positions such as polynucleotides with same sequences, often including molecules so-called ligands. Further, probes and targets are often exchangeably used, and the probes are substances either associable to targets as parts of ligand-antiligand (sometimes called receptor) pairs or changeable to substances that associate thereto. The probes and targets in the present invention can include bases found in nature and similar substances.

Examples of probes held on the substrate include oligonucleotides having base sequences hybridizable to target nucleic acids and having a bonding part to the substrate via linkers, the probe having structures connected to the surface of the substrate in the bonding part. The probe is preferably single-strand nucleic acid which has base sequence complemental to all or part of target nucleic acid and can hybridize specifically with the target nucleic acid. Further, in such a configuration the positions of the bonding part to the substrate in the oligonucleotide molecules are not limited as far as desired hybridization reaction is not damaged.

The probes adopted in the probe carriers manufactured by the method of the present invention are appropriately selected in their purpose of use. In order to implement the method of the present invention appropriately, the probes are preferably DNAs, RNAs, cDNAs (complementary DNAs), PNAs, oligonucleotides, polynucleotides, other nucleic acids, oligopeptides, polypeptides, proteins, enzymes, substrates for enzymes, antibodies, epitopes for antibodies, antigens, hormones, hormone receptors, ligands, ligand receptors, oligosaccharides, or polysaccharides, of which two or more can be used in combination if necessary.

In the present invention, plural kinds of these probes fixed on the separate regions (such as dot-shaped spots) of the surface of the substrate (including internal surfaces of hollow or ring shaped carriers) are called "probe carrier", and those arranged at determined intervals are called "probe array".

It is desirable that probe materials have structures bondable to the solid phase substrate, and are bonded to the solid phase substrate utilizing such bondable structures after ejection and application of probe solutions. The structures bondable to the solid phase substrate can be formed by introducing organic functional groups such as amino, mercapto, carboxyl, hydroxyl, acid halide (-COX), halogen, aziridine, maleimide, succinimide, isothiocyanate, sulfonyl chloride (-SO₂Cl), aldehyde (-CHO), hydrazine, and iodoaceatamide groups into the probe material molecules in advance. In that case, it is also necessary to introduce structures (organic functional groups) onto the surface of the substrate in advance, that form covalent bonds by reacting with the various functional groups described above. For example, when the probe material has amino groups, succinimide ester, isothiocyanate, sulfonyl chloride, or aldehyde can be introduced on the surface of the substrate. When the probe material has mercapto (thiol) groups, maleimide can be introduced on the surface of the substrate. When a glass substrate is used as the substrate, desired functional groups can be introduced on the surface thereof using a silane coupling agent having desired functional groups as well as a cross linker having desired functional groups.

Next the structure characteristic of the present invention will be explained.

As explained so far, the liquid ejection device is fixed to the device stand in the probe carrier manufacturing apparatus of the present invention. Therefore, it is different from the structure of conventional printers in that the liquid ejection device does not move at high speed. This enables stable manufacture of probe carriers even with the structure in which probe solutions will easily overflow from the reservoir as shown in Fig. 7 and Fig. 8.

Further, it is obvious that the same advantages are achieved when using piezoelectric jet type liquid ejecting device, even though the foregoing description explains the case where bubblejet type liquid ejecting device are used as an example.

A typical structure and operational principle thereof is disclosed in U.S. patent Nos. 4,723,129 and 4,740,796, and it is preferable to use this basic principle to implement such a system. Although this system can be applied either to on-demand type or continuous type liquid ejection systems, it is particularly suitable for the on-demand type apparatus. This is because the on-demand type apparatus has electrothermal transducers, each disposed on a sheet or liquid passage that retains liquid, and operates as follows: first, one or more drive signals are applied to the electrothermal transducers to cause thermal energy corresponding to manufacturing information; second, the thermal energy induces sudden temperature rise that exceeds the nucleate boiling so as to cause the film boiling on heating portions of the liquid ejecting device; and third, bubbles are grown in the liquid corresponding to the drive signals. By using the growth and collapse of the bubbles, the ink is expelled from at least one of the ink ejection orifices of the head to form one or more ink drops. The drive signal in the form of a pulse is preferable because the growth and collapse of the bubbles can be achieved instantaneously and suitably by this form of drive signal. As a drive signal in the form of a pulse, those described in U.S. patent Nos. 4,463,359 and 4,345,262 are preferable. In addition, it is preferable that the rate of temperature rise of the heating portions described in U.S. patent No. 4,313,124 be adopted to achieve better probe formation.

U.S. patent Nos. 4,558,333 and 4,459,600 disclose the following structure of a liquid ejecting device, which is incorporated to the present invention: this structure includes heating portions disposed on bent portions in addition to a combination of the ejection orifices, liquid passages (linear passages or right-angled passages) and the electrothermal transducers disclosed in the above patents. Moreover, the present invention can be applied to structures disclosed in Japanese Patent Application Laid-open Nos. 59-123670 (1984) and 59-138461 (1984) in order to achieve similar effects. The former discloses a structure in which a slit common to all the electrothermal transducers is used as ejection orifices of the electrothermal transducers, and the latter discloses a structure in which openings for absorbing pressure waves caused by thermal energy are formed corresponding to the ejection orifices. Thus, irrespective of the type of the liquid ejecting device, the present invention can achieve manufacture of probe carriers positively and effectively.

The present invention can be also applied to a so-called full-line type liquid ejecting device whose length equals the maximum length across a stage. Such a liquid ejecting device may consist of a plurality of liquid ejecting devices combined together, or one integrally arranged liquid ejecting device.

It is further preferable to add a recovery system, or a preliminary auxiliary system for a liquid ejecting device as a constituent of the manufacturing apparatus because they serve to make the effect of the present invention more reliable. Examples of the recovery system are a capping means and a cleaning means for the liquid ejecting device, and a pressure or suction means for the liquid ejecting device. Examples of the preliminary auxiliary system are a preliminary heating means utilizing electrothermal transducers or a combination of other heater elements and the electrothermal transducers, and means for carrying out preliminary ejection of ink independently of the ejection for forming a probe. These systems are effective for reliable formation of a probe carrier.

As describe above with the preferred embodiments, the probe carrier manufacturing method of the present invention enables stable manufacture of probe carriers without overflow of probe solutions from reservoirs of the liquid ejection device, by fixing the liquid ejection device that ejects probe solutions and adopting the structure in which the stage (substrate holding system) on which probe carriers are arranged moves two dimensionally relative to the above liquid ejection device.

The present invention has been described in detail with respect to preferred embodiments, and it will now be apparent from the foregoing to those skilled in the art that changes and modifications may be made without departing from the invention in its broader aspect, and it is the intention, therefore, in the apparent claims to cover all such changes and modifications as fall within the true spirit of the invention.

## Claims

1. A method for manufacturing a probe carrier in which plural kinds of probes are arranged on a substrate, **characterized by** comprising the step of: ejecting plural kinds of probe solutions containing probe materials specifically associable to target substances from a liquid ejecting device onto said substrate, wherein
said probe solutions are ejected from said liquid ejecting device onto said substrates while the substrate is moved relative to said liquid ejection device.

2. A method as claimed in Claim 1, **characterized in that** the liquid ejection device from which to eject said probe solutions is fixed, and said substrate is moved, when said probe solutions are ejected.

3. A method as claimed in claim 1 or claim 2 comprising applying thermal energy to the probe solutions in order to eject said probe solutions from said liquid ejection device.

4. A method as claimed in any preceding claim, **characterised in that** said target substance is a nucleic acid, and said probe is a single-strand nucleic acid which has base sequence complemental to all or part of said nucleic acid and hybridize specifically to a base sequence of said nucleic acid.

5. A method as claimed in any any one of claims 2 to 4, **characterised in that** said movement of the substrate is conducted by repeating a movement in a first direction and a movement in a second direction which is perpendicular to said first direction.

6. An apparatus for manufacturing a probe carrier in which plural kinds of probes are arranged on a substrate by ejecting plural kinds of probe solutions containing probe materials associable to a target substance from a liquid ejecting device onto said substrate, **characterized by** comprising: a substrate holding part for placing said substrate,
wherein said probe solutions are ejected from said liquid ejecting device onto said substrate while said substrate holding part whereupon said substrate is placed is moved relative to said liquid ejection device.

7. Apparatus as claimed in Claim 6, **characterized in that** the liquid ejection device from which to eject said probe solutions is fixed, and said substrate holding part is moved, when said probe solutions are ejected.

8. Apparatus as claimed in claim 6 or claim 7, **characterized in that** said liquid ejection device is provided with a thermal energy generating element that generates thermal energy to be applied to the probe solutions.

9. Apparatus as claimed in any one of claims 6 to 8, **characterised in that** said target substance is a nucleic acid, and said probe is a single-strand nucleic acid which has base sequence complemental to all or part of said nucleic acid and hybridizes specifically to a base sequence of said nucleic acid.

10. Apparatus as claimed in any one of claims 7 to 9, **characterised in that** said movement of the substrate holding part is conducted by repeating a movement in a first direction and a movement in a second direction which is perpendicular to said first direction.

11. Apparatus as claimed in any one of claims 7 to 10, **characterized in that** said liquid ejection device comprises a plurality of pair of ejection ports and solution reservoirs, said ejection ports are provided for ejecting said probe solution, said solution reservoirs are provided for supplying said probe solution to said ejection ports, said plurality of solution reservoirs being open, and said plurality of solution reservoirs are adjacent to each other.

12. A manufacturing apparatus as claimed in claim 6 or 7, wherein said liquid ejection device comprises a piezoelectric element that is deformable in response to an applied voltage, such that probe solutions are ejected from the liquid ejection device by deformation of said piezoelectric element.

13. A method as claimed in claim 1 or 2 comprising applying a voltage to a piezoelectric element to cause deformation of said piezoelectric element in order to eject probe solutions from said liquid ejection device.

14. A method according to any one of claims 1 to 5 and 13 comprising forming a plurality of probe carriers on a substrate and dividing the substrate to separate the probe carriers.
